# EUROPEAN PATENT APPLICATION

(11) **EP 3 786 906 A1**
(43) Date of publication of application: **03.03.2021**
(21) Application number: 18916595.4
(22) Date of filing: 07.12.2018
(51) Int. Cl.: G07C 9/00, G07F 11/00

(54) **SELF-SERVICE VENDING DEVICE CONTROL METHOD**

(30) Priority: 23.04.2018 CN 201810368927
(71) Applicant: Hefei Midea Intelligent Technologies Co., Ltd., Hefei, Anhui 230601 (CN)
(72) Inventor: CHEN, Zhenya, Hefei, Anhui 230601 (CN); TAO, Haijin, Hefei, Anhui 230601 (CN); HONG, Ming, Hefei, Anhui 230601 (CN); WANG, Huijun, Hefei, Anhui 230601 (CN); RAO, Longfei, Hefei, Anhui 230601 (CN); WANG, Yonghui, Hefei, Anhui 230601 (CN); YIN, Chao, Hefei, Anhui 230601 (CN); DAI, Jiang, Hefei, Anhui 230601 (CN)
(74) Representative: Haseltine Lake Kempner LLP
(86) International application number: PCT/CN2018/119654
(87) International publication number: WO 2019/205647

(57) **Abstract**

A method for controlling a self-service vending device to be safely opened, a server and a self-service vending system are provided. The method comprises: acquiring first position information of a mobile terminal when it is detected that the mobile terminal requests the self-service vending device to be opened by scanning two-dimensional code information on the self-service vending device, and acquiring identifier information of the self-service vending device according to the two-dimensional code information (101); querying a preset database according to the identifier information of the self-service vending device, and acquiring second position information corresponding to the self-service vending device (102); and calculating a distance between the mobile terminal and the self-service vending device according to the first position information and the second position information, and determining whether the distance is within a preset safe distance range (103); and when the distance is within the preset safe distance range, controlling the self-service vending device to be opened (103a). Through the method, it can be determined whether a code scanning-based cabinet opening action of a user is a real action of the user, so as to improve the safety of the user's property.

## Description

### CROSS-REFERENCE TO RELATED APPLICATION

The present application claims priority to Chinese patent application No. 2018103689279 filed on April 23, 2018, entitled "Method for Controlling Self-service Vending Device to Be Safely Opened, Server, and Self-service Vending System", which is incorporated herein by reference in its entirety.

### FIELD OF TECHNOLOGY

Embodiments of the present disclosure relate to the field of commercial automation device technologies, and in particular to a method for controlling a self-service vending device to be safely opened, a server, and a self-service vending system.

### BACKGROUND

Automatic vending machines can be seen everywhere in airports, schools, stations, shopping malls and other places. In particular, direct-selection type smart vending machines, which are more convenient for shopping, have rapidly replaced traditional vending machines in recent years. The direct-selection type smart vending machine is equipped with a controllable cabinet door. Customers can open the cabinet door by scanning the two-dimensional code on the vending machine and directly select the goods stored in the cabinet. Customers can touch the goods in the cabinet and check the information on the outer packaging of the goods, which makes it easier for customers to purchase goods, so that the customers can get a good shopping experience.

However, the current vending machines have certain safety hazards during the door opening control process. For example, in traditional vending machines, the opening of the cabinet is usually controlled by scanning the two-dimensional code through WeChat or Alipay. If someone sends a photo with the two-dimensional code of the vending machine to a user's WeChat or Alipay and the user accidentally clicks on the two-dimensional code to recognize it, the cabinet will be opened without the user's knowledge. At this time, the goods in the cabinet may be lost, and the loss needs to be borne by the user, thereby bringing certain hidden dangers to the user's property safety.

### BRIEF SUMMARY

In view of the shortcomings in the prior art, the embodiments of the present disclosure provide a method for controlling a self-service vending device to be safely opened, a server, and a self-service vending system. The method for controlling the self-service vending device to be safely opened provided by the embodiments of the present disclosure can solve some or all of the problems mentioned above.

To achieve the objective above, the embodiments of the present disclosure provide the following technical solutions.

In a first aspect, the embodiments of the present disclosure provide a method for controlling a self-service vending device to be safely opened, including:
acquiring first position information of a mobile terminal when it is detected that the mobile terminal requests the self-service vending device to be opened by scanning two-dimensional code information on the self-service vending device, and acquiring identifier information of the self-service vending device according to the two-dimensional code information;
querying a preset database according to the identifier information of the self-service vending device, and acquiring second position information corresponding to the self-service vending device; and
calculating a distance between the mobile terminal and the self-service vending device according to the first position information and the second position information, and determining whether the distance is within a preset safe distance range; and when the distance is within the preset safe distance range, controlling the self-service vending device to be opened.

In an embodiment, the method further includes:
sending a prompt message to the mobile terminal when it is determined that the distance is not within the preset safe distance range.

In an embodiment, the prompt message includes a confirmation button for controlling whether to open the self-service vending device.

In an embodiment, the method further includes:
receiving position information regularly reported by the self-service vending device, and storing the received position information and the identifier information of the self-service vending device in the preset database correspondingly.

Correspondingly, the querying a preset database according to the identifier information of the self-service vending device, and acquiring the second position information corresponding to the self-service vending device includes:
querying the preset database according to the identifier information of the self-service vending device, and acquiring the latest position information corresponding to the identifier information of the self-service vending device.

In a second aspect, the embodiments of the present disclosure also provide a server, including:
a first acquirer configured to acquire first position information of a mobile terminal when it is detected that the mobile terminal requests the self-service vending device to be opened by scanning two-dimensional code information on the self-service vending device, and acquire identifier information of the self-service vending device according to the two-dimensional code information;
a second acquirer configured to query a preset database according to the identifier information of the self-service vending device, and acquire second position information corresponding to the self-service vending device; and
a determiner configured to calculate a distance between the mobile terminal and the self-service vending device according to the first position information and the second position information, and determine whether the distance is within a preset safe distance range; and
a controller configured to control the self-service vending device to be opened when the distance is within the preset safe distance range.

In an embodiment, the controller further includes:
a prompter configured to send a prompt message to the mobile terminal when the determiner determines that the distance is not within the preset safe distance range.

In an embodiment, the prompt message includes a confirmation button for controlling whether to open the self-service vending device.

In an embodiment, the server further includes:
a receiver configured to receive position information regularly reported by the self-service vending device, and storing the received position information and the identifier information of the self-service vending device in the preset database correspondingly.

Accordingly, the second acquirer is specifically configured to:
query the preset database according to the identifier information of the self-service vending device, and acquire the latest position information corresponding to the identifier information of the self-service vending device.

In a third aspect, the embodiments of the present disclosure also provide a self-service vending system, including the self-service vending device and the server as described in the second aspect.

In a fourth aspect, the embodiments of the present disclosure also provide an electronic device, including a memory, a processor, and computer programs stored on the memory and executable on the processor, wherein the processor is configured to implement steps of the method for controlling the self-service vending device to be safely opened as described in the first aspect when executing the computer programs.

In a fifth aspect, the embodiments of the present disclosure also provide a computer-readable storage medium on which computer programs are stored, and the computer programs are executed by a processor to implement steps of the method for controlling the self-service vending device to be safely opened as described in the first aspect.

According to the technical solution above, in the method for controlling a self-service vending device to be safely opened provided by the embodiments of the present disclosure, first position information of a mobile terminal is firstly acquired when it is detected that the mobile terminal requests the self-service vending device to be opened by scanning two-dimensional code information on the self-service vending device, and identifier information of the self-service vending device is acquired according to the two-dimensional code information. Next, a preset database is queried according to the identifier information of the self-service vending device, and second position information corresponding to the self-service vending device is acquired. Finally, a distance between the mobile terminal and the self-service vending device is calculated according to the first position information and the second position information, and whether the distance is within a preset safe distance range is determined; and when the distance is within the preset safe distance range, the self-service vending device is controlled to be opened. According to the embodiments of the present disclosure effectively utilize the position information of the mobile terminal, and then it is determined whether a user is within a safe distance range based on the position information of the mobile terminal and the position information of the self-service vending device, and it can be further inferred whether the user's cabinet opening action by scanning the two-dimensional code is a real action of the user, thereby improving the safety protection of the user's property. For example, the case that the self-service vending device is opened remotely by scanning the two-dimensional code thereof can be prevented according to the opening control method provided by the embodiments of the present disclosure.

### BRIEF DESCRIPTION OF THE DRAWINGS

In order to more clearly illustrate the embodiments of the present disclosure or the technical solutions in the prior art, the drawings needed in the descriptions of the embodiments or the prior art will be briefly introduced below. Obviously, the drawings in the following description are certain embodiments of the present disclosure, and other drawings can be obtained according to these drawings without any creative work for those skilled in the art.
Fig. 1 is a flowchart of a method for controlling a self-service vending device to be safely opened according to an embodiment of the present disclosure;
Fig. 2 is another flowchart of a method for controlling a self-service vending device to be safely opened according to an embodiment of the present disclosure;
Fig. 3 is a complete control flowchart of a method for controlling a self-service vending device to be safely opened according to an embodiment of the present disclosure;
Fig. 4 is a schematic structural diagram of a server according to another embodiment of the present disclosure;
Fig. 5 is another schematic structural diagram of a server according to another embodiment of the present disclosure;
Fig. 6 is still another schematic structural diagram of a server according to another embodiment of the present disclosure; and
Fig. 7 is a schematic structural diagram of an electronic device according to another embodiment of the present disclosure.

### DETAILED DESCRIPTION

In order to make the object, technical solutions and advantages of the embodiments of the present disclosure clearer, the technical solutions in the embodiments of the present disclosure will be clearly and completely described in the following with reference to the accompanying drawings in the present disclosure. Obviously, the described embodiments are part of the embodiments of the present disclosure, and not all of them. All other embodiments obtained by a person of ordinary skill in the art based on the embodiments in the present disclosure without any creative work belong to the protection scope of the present disclosure.

The following disclosure provides many different embodiments or examples for implementing different structures of the present disclosure. In order to simplify the present disclosure, the components and arrangements of specific examples are described below. Of course, they are only examples, and are not intended to limit the present disclosure. In addition, the present disclosure may repeat reference numbers and/or letters in different examples. These repetitions are for the purpose of simplification and clarity, and does not indicate the relation between various embodiments and/or arrangements discussed.

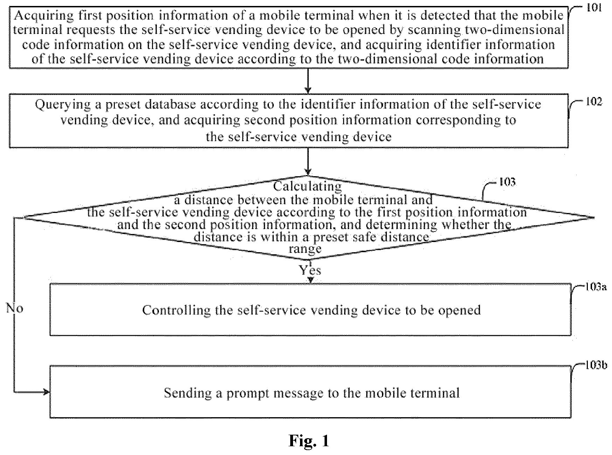

An embodiment of the present disclosure provides a method for controlling a self-service vending device to be safely opened. Referring to Fig. 1, the method for controlling a self-service vending device to be safely opened includes the following steps:
step 101: acquiring first position information of a mobile terminal when it is detected that the mobile terminal requests the self-service vending device to be opened by scanning two-dimensional code information on the self-service vending device, and acquiring identifier information of the self-service vending device according to the two-dimensional code information.

In this step, a server firstly acquires position information of the mobile terminal when it detects that the mobile terminal requests the self-service vending device to be opened by scanning two-dimensional code information on the self-service vending device and then determines whether a distance between the mobile terminal and the self-service vending device is within a preset safe distance range according to the position information, and controls whether the self-service vending device is opened. In an embodiment, the position information mentioned here may be GPS positioning data. That is, the server may obtain position information of the mobile terminal by acquiring GPS positioning data thereof when acquiring the position information of the mobile terminal.

It is understandable that the server may detect two-dimensional code scanning action when the mobile terminal scans the two-dimensional code on the self-service vending device through WeChat or Alipay, and acquire GPS coordinate data of the mobile terminal by communicating with a preset API data interface built in the WeChat or Alipay program in the mobile terminal according to this two-dimensional code scanning action. Here, the preset API data interface refers to an API interface related to a position, through which the GPS coordinate data of the mobile terminal may be read.

In this step, the mobile terminal may be a mobile phone, a PAD or other smart mobile device.

Step 102: querying a preset database according to the identifier information of the self-service vending device, and acquiring second position information corresponding to the self-service vending device.

In this step, the server may detect two-dimensional code scanning action when the mobile terminal scans the two-dimensional code on the self-service vending device, acquire the identifier information of the self-service vending device according to information on the scanned two-dimensional code and then query a preset database according to the identifier information of the self-service vending device. In an embodiment, one-to-one correspondence between the identifier information of the self-service vending device and the position thereof is stored in the preset database.

It is understandable that the one-to-one correspondence between the identifier of the self-service vending device and the position thereof is stored in the preset database in advance, or it may be updated according to positioning data reported by the self-service vending device in real time and may also be maintained manually in real time.

Step 103: calculating a distance between the mobile terminal and the self-service vending device according to the first position information and the second position information, and determining whether the distance is within a preset safe distance range; and controlling the self-service vending device to be opened when the distance is within the preset safe distance range.

In this step, the preset safe distance range generally refers to within 10 meters, that is, the mobile terminal is within 10 meters from the self-service vending device.

Step 103a: controlling the self-service vending device to be opened.

Step 103b: sending a prompt message to the mobile terminal.

It is understandable that when it is determined in the step 103 that the distance between the mobile terminal and the self-service vending device is within the preset safe distance range, it indicates that a user is holding the mobile terminal to make a purchase, that is, the two-dimensional code scanning action at this moment is actually a real intention of the user, so the self-service vending device should be controlled to be opened. When it is determined that the distance between the mobile terminal and the self-service vending device is not within the preset safe distance range (for example, the mobile terminal is 100 meters (greater than 10 meters) from the self-service vending device), it is understandable that the two-dimensional code scanning action at this moment is actually not a real intention of the user, that is, it is very likely that the user has scanned the two-dimensional code of the device by mistake (for example, the user has mistakenly scanned the two-dimensional code image or link sent by others in WeChat or Alipay). At this time, in order to ensure the safety of the user's property, instead of controlling the self-service vending device to be opened, a prompt message should be sent to the mobile terminal (through the WeChat or Alipay) to prompt the user that the mobile terminal performs this two-dimensional code scanning action. In addition, the specific position information of the scanned self-service vending device may be provided to the user so that the user may understand more detailed information (for example, if the user's mobile phone was lost, the user could know where the mobile phone is being used). In an embodiment, when the prompt message is send to the mobile terminal, a confirmation button for controlling whether to open the self-service vending device may also be provided simultaneously for the user to select. For example, there are two scenarios. One scenario is that the above two-dimensional code scanning action appears when the user has accidentally scanned the two-dimensional code image sent by others in WeChat or Alipay while the distance between the mobile terminal and the self-service vending device is not within the safe distance range. In this case, the user can reply a confirmation message of not opening the door according to the prompt. Another scenario is that the user just has a reliable third person to help purchase remotely, although the distance between the mobile terminal and the self-service vending device is not within the safe distance range, then the user can reply a confirmation message for opening the door according to the prompt, so that a third person entrusted by the user can help purchase, and the user himself pays. In this way, the safety of the user's property can not only be ensured and the flexibility of the user's usage can also be improved.

According to the description above, in the method for controlling a self-service vending device to be safely opened provided by the present embodiment, first position information of a mobile terminal is firstly acquired when it is detected that the mobile terminal requests the self-service vending device to be opened by scanning two-dimensional code information on the self-service vending device, and identifier information of the self-service vending device is acquired according to the two-dimensional code information. Next, a preset database is queried according to the identifier information of the self-service vending device, and second position information corresponding to the self-service vending device is acquired. Finally, a distance between the mobile terminal and the self-service vending device is calculated according to the first position information and the second position information, and whether the distance is within a preset safe distance range is determined; and when the distance is within the preset safe distance range, the self-service vending device is controlled to be opened. According to the present embodiments effectively utilizes the position information of the mobile terminal, and then it is determined whether a user is within a safe distance range based on the position information of the mobile terminal and the position information of the self-service vending device, and it is further inferred that whether the user's cabinet opening action by scanning the two-dimensional code is a real action of the user, thereby improving the safety protection of the user's property. For example, the case that the self-service vending device is opened remotely by scanning the two-dimensional code thereof can be prevented according to the opening control method provided by the present embodiments.

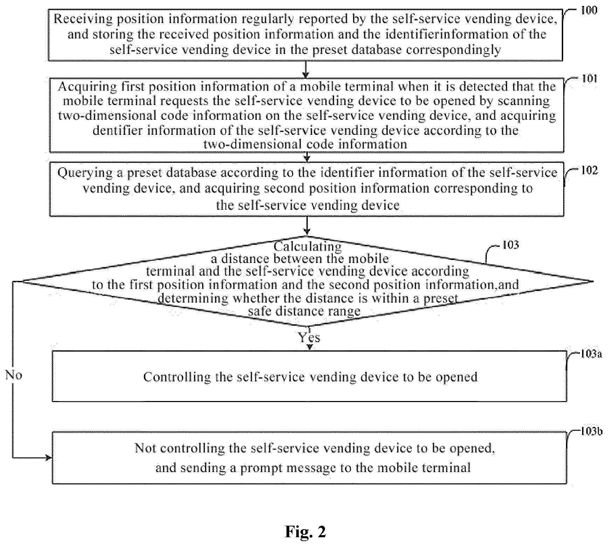

In an implementation, referring to Fig. 2, the method also includes step 100. It should be noted that the step 100 may proceed before the step 101, or it may proceed simultaneously with the step 101.

Step 100: receiving position information regularly reported by the self-service vending device, and storing the received position information and the identifier information of the self-service vending device in the preset database correspondingly.

Accordingly, the step 102 specifically includes:
querying the preset database according to the identifier information of the self-service vending device, and acquiring the latest position information corresponding to the identifier information of the self-service vending device.

It is understandable that receiving the position information regularly reported by the self-service vending device and storing the received position information in the preset database ensure that the latest position information of the self-service vending device may be stored in the preset database, such that the accuracy and validity of subsequent determinations may be ensured. In embodiments, the time period for the self-service vending device to report regularly, for example, every hour, every other day, or every other week, can be preset.

In addition, a time-position curve of the self-service vending device can be formed according to the position information regularly reported by the self-service vending device (it is understandable that the time-position curve should be a gentle curve or straight line since the position of self-service vending device would not change frequently in general), and then the accuracy of the position information reported by the self-service vending device at a certain time can be determined according to the time-position curve. For example, when it is detected that the coordinate data reported by the self-service vending device at certain a time deviates from the time-position curve seriously, it can be manually checked to confirm whether coordinate data uploaded by the self-service vending device is accurate, so as to avoid the case that the wrong position information reported by the self-service vending device leads to errors in subsequent determination.

It should be noted that the multiple implementations given in this embodiment can be freely combined on the premise that the logic or structure does not conflict with each other, and the present disclosure does not limit this.

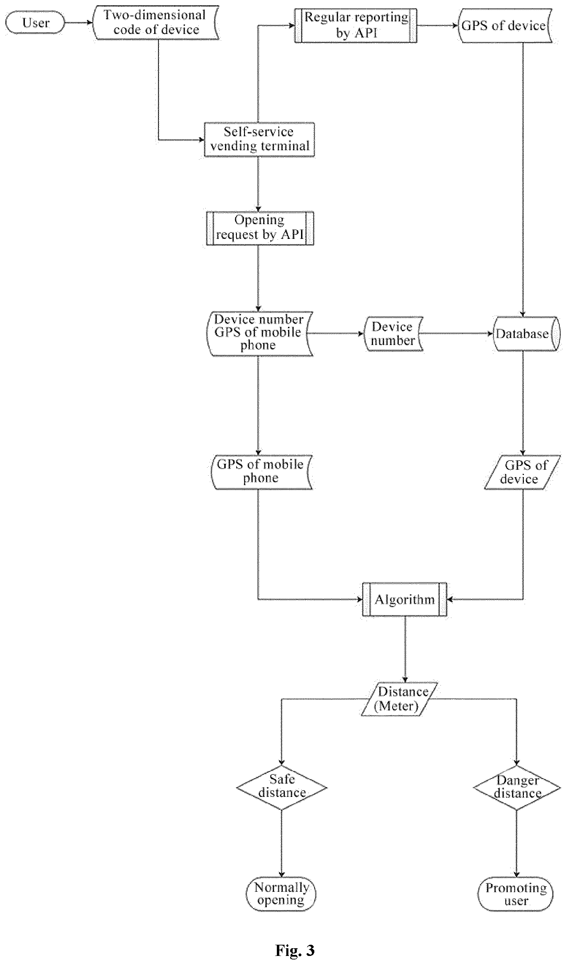

Fig. 3 shows a complete control flowchart of a method for controlling a self-service vending device to be safely opened according to an embodiment. Referring to Fig. 3, in the safe opening control method provided in this embodiment, the user's use environment may be confirmed and whether the user is within the safe distance range of the self-service vending device may be determined by acquiring the position data of the mobile terminal. The safe opening control method can provide safe guidance and prompts to the user and protect the user's property from loss.

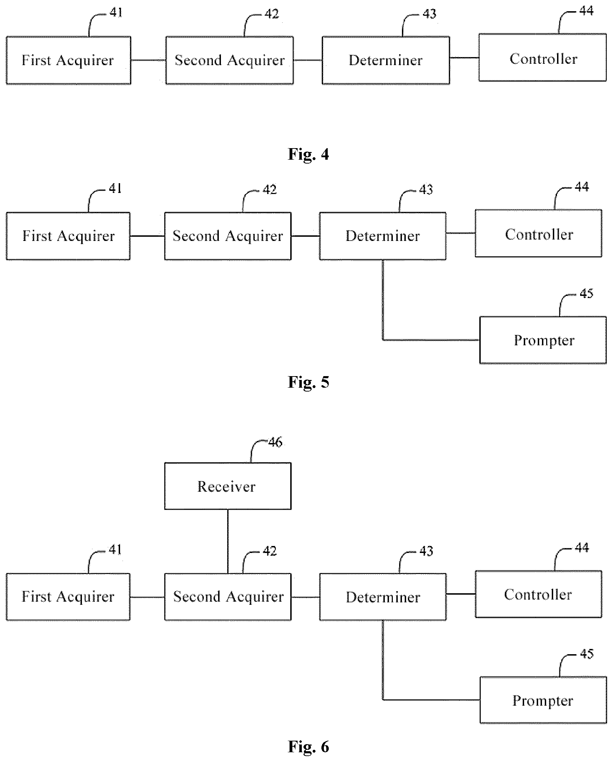

Based on the same inventive concept, another embodiment of the present disclosure provides a server. Referring to Fig. 4, the server includes: a first acquirer 41, a second acquirer 42, a determiner 43, and a controller 44, wherein:
a first acquirer 41 is configured to acquire first position information of a mobile terminal when it is detected that the mobile terminal requests the self-service vending device to be opened by scanning two-dimensional code information on the self-service vending device and acquire identifier information of the self-service vending device according to the two-dimensional code information;
a second acquirer 42 is configured to query a preset database according to identifier information of the self-service vending device, and acquire second position information corresponding to the self-service vending device;
a determiner 43 is configured to calculate a distance between the mobile terminal and the self-service vending device according to the first position information and the second position information, and determine whether the distance is within a preset safe distance range; and
a controller 44 is configured to control the self-service vending device to be opened when the determiner 43 determines that the distance is within the preset safe distance range.

In one implementation, referring to Fig. 5, the server further includes a prompter 45.

The prompter 45 is configured to send a prompt message to the mobile terminal when the determiner determines that the distance is not within the preset safe distance range.

In one implementation, the prompt message includes a confirmation button for controlling whether to open the self-service vending device.

In one implementation, referring to Fig. 6, the server further includes a receiver 46.

The receiver 46 is configured to receive position information regularly reported by the self-service vending device, and storing the received position information and the identifier information of the self-service vending device in the preset database correspondingly.

Accordingly, the second acquirer 42 is specifically configured to:
query the preset database according to the identifier information of the self-service vending device, and acquire the latest position information corresponding to the identifier information of the self-service vending device.

It should be noted that the multiple implementations given in this embodiment can be freely combined on the premise that the logic or structure does not conflict with each other, and the present disclosure does not limit this.

The server provided in this embodiment can be configured to perform the method for controlling a self-service vending device to be safely opened described in the foregoing embodiments, and has the similar working principles and beneficial effects. Please refer to the foregoing method embodiments for detail, which will be omitted here.

Based on the embodiments above, another embodiment of the present disclosure provides a self-service vending system. The self-service vending system includes a self-service vending device and the server as described in the embodiments above.

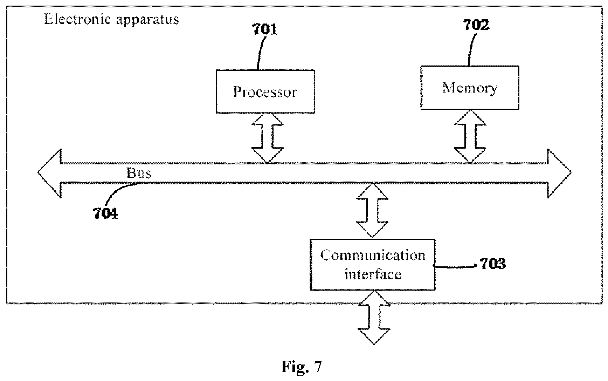

Based on the embodiments above, another embodiment of the present disclosure provides an electronic apparatus. Referring to Fig. 7, the electronic apparatus specifically includes: a processor 701, a memory 702, a communication interface 703, and a bus 704.

Wherein the processor 701, the memory 702 and the communication interface 703 communicate with each other through the bus 704; the communication interface 703 is configured to implement information transmission between various modeling software and intelligent manufacturing equipment module libraries and other related equipment.

The processor 701 is configured to call computer programs in the memory 702. When the processor executes the computer programs, all the steps in the first embodiment are realized. For example, when the processor executes the computer programs, the following steps are realized:
step 101: acquiring first position information of a mobile terminal when it is detected that the mobile terminal requests the self-service vending device to be opened by scanning two-dimensional code information on the self-service vending device, and acquiring identifier information of the self-service vending device according to the two-dimensional code information;
step 102: querying a preset database according to the identifier information of the self-service vending device, and acquiring second position information corresponding to the self-service vending device; and
step 103: calculating a distance between the mobile terminal and the self-service vending device according to the first position information and the second position information, and determining whether the distance is within a preset safe distance range; and when the distance is within the preset safe distance range, performing step 103a and otherwise performing step 103b.
Step 103a: controlling the self-service vending device to be opened.
Step 103b: sending a prompt message to the mobile terminal.

Based on the embodiments above, the embodiment of the present disclosure provides a computer-readable storage medium on which computer programs are stored, and all the steps of the first embodiment are realized when the computer programs are executed by a processor. For example, when the processor executes the computer program, the following steps are realized:
step 101: acquiring first position information of a mobile terminal when it is detected that the mobile terminal requests the self-service vending device to be opened by scanning two-dimensional code information on the self-service vending device, and acquiring identifier information of the self-service vending device according to the two-dimensional code information;
step 102: querying a preset database according to the identifier information of the self-service vending device, and acquiring second position information corresponding to the self-service vending device; and
step 103: calculating a distance between the mobile terminal and the self-service vending device according to the first position information and the second position information, and determining whether the distance is within a preset safe distance range; and when the distance is within the preset safe distance range, performing step 103a and otherwise performing step 103b.
Step 103a: controlling the self-service vending device to be opened.
Step 103b: sending a prompt message to the mobile terminal.

In the description of the embodiments of the present disclosure, it is to be noted that the orientation or positional relationships indicated by terms such as "upper", "lower", etc. are based on the orientation or positional relationship shown in the drawings, and are merely for the convenience of describing the embodiments of the present disclosure and simplifying the description, rather than indicating or implying that the device or component stated must have a particular orientation, or be constructed and operated in a particular orientation, and thus cannot be construed as limiting the disclosure. Unless explicitly stated and defined otherwise, the terms "installed", "connected with" and "connected" shall be understood broadly, for example, it may be either fixedly connected or detachably connected, or can be integrated; it may be mechanically connected, or electrically connected; it may be directly connected, or indirectly connected through an intermediate medium, and may be the internal communication between two elements. The specific meanings of the terms above in the embodiments of the present disclosure can be understood by a person skilled in the art in accordance with specific conditions.

It should also be noted that in this specification, relational terms such as "first" and "second" are only used to distinguish one entity or operation from another entity or operation, and do not necessarily require or imply any such actual relation or order among these entities or operations. Also, the terms "include", "comprise" or any other variants thereof are intended to cover non-exclusive inclusion, so that a process, a method, an article, or a device including a series of elements includes not only those elements, but also other elements which are not explicitly listed, or elements inherent to the process, the method, the article or the device. If there are no more limitations, the element defined by the sentence "including a(an)..." does not exclude the existence of other same elements in the process, method, article, or device including the element.

The embodiments above are only used to explain the technical solutions of the present disclosure, not to limit them; although the present disclosure is described in detail with reference to the foregoing embodiments, it should be understood by those skilled in the art that they can still modify the technical solutions described in the foregoing embodiments and make equivalent replacements to a part of the technical features; and these modifications and substitutions do not make the essence of the corresponding technical solutions depart from the spirit and scope of the technical solutions of the embodiments of the present disclosure.

## Claims

1. A method for controlling a self-service vending device to be safely opened, comprising:
acquiring first position information of a mobile terminal when it is detected that the mobile terminal requests the self-service vending device to be opened by scanning two-dimensional code information on the self-service vending device, and acquiring identifier information of the self-service vending device according to the two-dimensional code information;
querying a preset database according to the identifier information of the self-service vending device, and acquiring second position information corresponding to the self-service vending device; and
calculating a distance between the mobile terminal and the self-service vending device according to the first position information and the second position information, and determining whether the distance is within a preset safe distance range; and when the distance is within the preset safe distance range, controlling the self-service vending device to be opened.

2. The method of claim 1, further comprising:
sending a prompt message to the mobile terminal when it is determined that the distance is not within the preset safe distance range.

3. The method of claim 2, **characterized in that** the prompt message includes a confirmation button for controlling whether to open the self-service vending device.

4. The method of claim 1, further comprising:
receiving position information regularly reported by the self-service vending device, and storing the received position information and the identifier information of the self-service vending device in the preset database correspondingly;
accordingly, the querying a preset database according to the identifier information of the self-service vending device, and acquiring second position information corresponding to the self-service vending device includes:
querying the preset database according to the identifier information of the self-service vending device, and acquiring the latest position information corresponding to the identifier information of the self-service vending device.

5. A server, comprising:
a first acquirer configured to acquire first position information of a mobile terminal when it is detected that the mobile terminal requests the self-service vending device to be opened by scanning two-dimensional code information on the self-service vending device and acquire identifier information of the self-service vending device according to the two-dimensional code information;
a second acquirer configured to query a preset database according to identifier information of the self-service vending device, and acquire second position information corresponding to the self-service vending device;
a determiner configured to calculate a distance between the mobile terminal and the self-service vending device according to the first position information and the second position information, and determine whether the distance is within a preset safe distance range; and
a controller configured to control the self-service vending device to be opened when the determiner determines that the distance is within the preset safe distance range.

6. The server of claim 5, further comprising:
a prompter configured to send a prompt message to the mobile terminal when the determiner determines that the distance is not within the preset safe distance range.

7. The server of claim 6, **characterized in that** the prompt message includes a confirmation button for controlling whether to open the self-service vending device.

8. The server of claim 5, further comprising:
a receiver configured to receive position information regularly reported by the self-service vending device, and storing the received position information and the identifier information of the self-service vending device in the preset database correspondingly;
accordingly, the second acquirer is specifically configured to:
query the preset database according to the identifier information of the self-service vending device, and acquire the latest position information corresponding to the identifier information of the self-service vending device.

9. A self-service vending system comprising a self-service vending device and the server of any of claims 5-8.

10. An electronic device comprising a memory, a processor, and computer programs stored on the memory and executable on the processor, **characterized in that** steps of the method for controlling the self-service vending device to be safely opened of any of claims 1 to 4 are realized when the processor executes the computer programs.

11. A computer-readable storage medium, on which computer programs are stored, wherein steps of the method for controlling the self-service vending device to be safely opened of any of claims 1 to 4 are realized when computer programs are executed by a processor.
